Europäisches Patentamt

European Patent Office

Office européen des brevets

(11) Numéro de publication: **0 390 923**
**A1**

(12) **DEMANDE DE BREVET EUROPEEN PUBLI E EN APPLICATION DE L'article 158, paragraphe 3 de la CBE**

(21) Numéro de dépôt: 89901155.5

(22) Date de dépôt: 23.09.88

(86) Numéro de dépôt internationale : PCT/SU88/00183

(87) Numéro de publication internationale : WO 90/03345 (05.04.90 90/08)

(51) Int. Cl.⁵: **C04B 22/16**

(43) Date de publication de la demande: **10.10.90 Bulletin 90/41**

(84) Etats contractants désignés: **DE FR IT NL SE**

(71) Demandeur: **KAZAKHSKY KHIMIKO-TEKHNOLOGICHESKY INSTITUT**
**Kommunistichesky pr. 5**
**Chimkent, 486018(SU)**

(72) Inventeur: **LERKE, Pavel Pavlovich**
**ul. Lugovaya, 4**
**Chimkent, 486009(SU)**
Inventeur: **TEREKHOVICH, Stanislav Vikentievich**
**ul. Dostoevskogo, 17**
**Chimkent, 486011(SU)**
Inventeur: **SINDEEV, Boris Vladimirovich**
**ul. Shopena, 5**
**Chimkent, 486009(SU)**
Inventeur: **KURNIKOV, Boris Afanasievich**
**ul. Mira, 19 Chimkentskaya obl.**

**pos. Sas-Tjube, 48780(SU)**
Inventeur: **PODDUBNY, Ilya Matveevich**
**kvartal 19, 17-25 massiv Chilanzar**
**Tashkent, 700156(SU)**
Inventeur: **DONGAUZER, Ivan Ivanovich**
**mikroraion 18, 16-4**
**Chimkent, 486035(SU)**
Inventeur: **SHNAIDER, Valery Vasilievich**
**mikroraion 17, 20-58**
**Chimkent, 486035(SU)**
Inventeur: **KOZHAMURATOV, Satbek**
**ul. Gaidara, 143**
**Chimkent, 486014(SU)**
Inventeur: **LERKE, Alexandr Pavlovich**
**ul. Lugovaya, 4**
**Chimkent, 486009(SU)**

(74) Mandataire: **Durand, Yves Armand Louis et al**
**CABINET WEINSTEIN 20, Avenue de Friedland**
**F-75008 Paris(FR)**

(54) **PROCEDE D'OBTENTION D'UN MELANGE DE MINERAL ACTIF POUR MATERIAUX DE CIMENTATION.**

(57) On soumet le produit de départ, un laitier de haut fourneau granulé ou un laitier phosphoré granulé, à un traitement thermique effectué à une température de 1000 à 1200°C dans un milieu gazeux oxydant, pour obtenir finalement un additif minéral actif pour des matériaux de liaison.

- 1 -

"Procédé d'obtention d'un additif minéral actif pour des matériaux de liaison".

Domaine de la technique

La présente invention concerne la fabrication de matériaux de liaison, et vise plus précisément un procédé d'obtention d'additifs minéraux actifs pour des matériaux de liaison.

Etat de la technique

Il connu de fabriquer des ciments en utilisant, outre. un clinker de ciment portland et le gypse, des additifs minéraux actifs, dont la part relative massique varie entre 5 et 60 % en masse. L'incorporation au ciment d'additifs minéraux actifs permet de réduire le prix de revient du ciment, elle modifie également, dans certains cas, les qualités technologiques du ciment (la cinétique de la prise du ciment, le dégagement de chaleur, la durée de la prise, la résistance aux sulfates).

En tant qu'additif minéral actif, on peut utiliser, dans la fabrication du ciment, aussi bien des additifs artificiels que des additifs minéraux naturels. Parmi ces derniers on classe la diatomite, le tripoli, la gaize, l'argile cuite naturelle. Parmi les additifs minéraux artificiels on classe les laitiers de haut fourneau et les laitiers phosphorés.

En cas d'utilisation des laitiers de haut fourneau et des laitiers phosphorés en tant qu'additifs minéraux pour les ciments, les laitiers subissent une granulation par dispersion de ces laitiers à l'état fondu et leur refroidissement brutal. Mais, traités de cette manière, les laiters granulés présentent une faible activité

- 2 -

hydraulique et un bas coefficient de blancheur.

On accroît l'activité hydraulique des laitiers de haut fourneau granulés en soumettant ces derniers, pendant 1 à 5 minutes, à un traitement thermique effectué à une température de 700°C (I.N. Rogacheva, "Recherche et développements dans le domaine de la technologie du ciment à l'oxyde de magnésium résistant à l'eau", Kharkovsky polytekhnichesky institut imeni V.I. Lenina, 1975, pp. 12-14). Il en résulte une cristallisation partielle de la phase vitreuse et un accroissement de la défectuosité de la structure, d'où l'accroissement de l'activité hydraulique des laitiers, ce qui permet, par la suite, d'augmenter de 2 à 3 MPa la solidité du ciment. La blancheur de l'additif obtenu est de 60 %.

Exposé de l'invention

L'invention se propose, en modifiant la structure et la composition minéralogique du laitier, de fournir un procédé d'obtention d'un additif minéral actif présentant une activité hydraulique et une blancheur accrues.

La meilleure variante de réalisation

Le problème ainsi posé est résolu avec un procédé d'obtention d'un additif minéral actif pour des matériaux de liaison par traitement thermique d'un laitier de haut fourneau granulé ou d'un laitier phosphoré granulé, dans lequel, selon l'invention, le traitement thermique est effectué dans un milieu gazeux oxydant à une température de 1000 à 1200°C.

L'invention permet d'obtenir des additifs d'une blancheur de 80 à 96 % (à base d'un laitier phosphoré)

- 3 -

ou de 70 à 80 % (à base d'un laitier de haut fourneau).
L'activité hydraulique de l'additif minéral, déterminée
d'après la solidité du ciment contenant 10 à 60 % en
masse de laitiers, s'est accrue de 3 à 7 MPa.

Conformément à l'invention, pour abaisser la température
de traitement thermique des laitiers jusqu'à 1000 à
1100°C et accroître l'activité hydraulique de l'additif
(d'après la solidité du ciment) de 5 à 7 MPa, on a
intérêt à utiliser un milieu oxydant vapeur-gaz, dans
lequel le rapport massique entre l'oxygène et la vapeur
d'eau est compris entre 10:1 et 1:10.

Conformément à l'invention, on a intérêt, en vue d'un
nouvel accroissement de l'activité hydraulique de
l'additif (d'après la solidité du ciment) de 7 à 10 MPa,
à effectuer le traitement thermique du laitier en le
réchauffant instantanément et en le refroidissant
brusquement ensuite.

D'autres caractéristiques et avantages de l'invention
seront mieux compris à la lecture de la description qui
va suivre du procédé d'obtention de l'additif minéral
actif et des exemples non limitatifs de réalisation de
ce procédé.

Conformément à l'invention, on utilise comme produit de
départ pour la fabrication de l'additif minéral actif un
laitier de haut fourneau granulé ou un laitier phosphoré
granulé.

Du point de vue de la composition chimique, les laitiers
phosphorés sont constitués de 38 à 42 % en masse d'oxyde
de silicium, de 2 à 4 % en masse d'oxyde d'aluminium, de
0,1 à 0,3 % en masse d'oxyde de fer, de 38 à 48 % en
masse d'oxyde de calcium, de 2 à 5 % en masse d'oxyde de

- 4 -

magnésium, de 0,4 % en masse d'oxydes de métaux alcalins, de 1,5 à 2,8 % en masse de fluor et de 0,5 à 2,5 % en masse de pentoxyde de phosphore. Les laitiers de haut fourneau sont constitués de 38 à 50 % d'oxyde de silicium, de 5 à 18 % en masse d'oxyde d'aluminium, de 0,1 à 1,0 % en masse d'oxyde de fer, de 38 à 50 % en masse d'oxyde de calcium, de 2 à 10 % en masse d'oxyde de magnésium, de 0,6 % en masse d'oxydes de métaux alcalins, de 1,15 % en masse de soufre sous forme de sulfures.

Du point de vue de la composition minéralogique, les laitiers phosphorés granulés sont constitués de 80 à · 85 % en masse d'une phase vitreuse ayant une composition de la wollastonite, de 10 à 15 % en masse de pseudo-wollastonite, de 5 à 10 % de mélilite. Les laitiers phosphorés cristallisés sont constitués de 40 à 90 % en masse de wollastonite, de 10 à 60 % en masse de mélilite, de 3 à 10 % en masse de rankinite, de 5 à 10 % en masse de cuspidine, de 0,5 à 2,0 % en masse de sulfures de fer, de manganèse et de calcium et de 0,5 à 2,0 % en masse de phosphures de fer et de manganèse. Les laitiers de haut fourneau granulés sont constitués de 80 à 85 % en masse d'une phase vitreuse et de 15 à 20 % en masse d'une phase cristalline d'une composition de la mélilite ou de la wollastonite. Le laitier de haut fourneau cristallin est constitué de 20 à 70 % en masse de wollastonite, de 10 à 80 % en masse de mélilite, de 3 à 10 % en masse de rankinite, de 1 à 2 % en masse de sulfures de fer et de manganèse et de 0,5 à 1 % en masse de phosphures de fer et de manganèse.

Le procédé de l'invention peut être mis en oeuvre avec des laitiers ayant une structure tant vitreuse que cristalline. La taille des grains du laitier utilisé ne doit pas dépasser 15 mm.

- 5 -

Conformément à l'invention, les laitiers de haut fourneau ou phosphorés subissent un traitement thermique effectué à une température de 1000 à 1200°C dans un milieu gazeux oxydant.

Au cours du traitement thermique précité, il y a une oxydation des phosphures et des sulfures de fer et de manganèse jusqu'aux phosphates, sulfates, phosphites, sulfites et hydrophosphites de ces métaux, qui sont incolores ou faiblement colorés. En outre, il y a transformation de l'okermanite en gélinite, de l' $\alpha$ - wollastonite en $\beta$ -wollastonite, cette dernière présentant une activité hydraulique accrue, ainsi qu'une réceptivité à la coloration et une capacité isomorphe diminuées.

Lors du traitement thermique des laitiers dans un milieu vapeur-gaz oxydant, il se produit, outre ce qui vient d'être dit, la formation de phases rappelant la bélite et la dépolymérisation de la structure composée de tétraèdres oxygéno-siliciques.

Si l'on effectue le traitement thermique à une température inférieure à 1000°C, la blancheur et l'activité hydraulique du laitier diminuent, car les phosphures de fer et de manganèse ne s'oxydent pas à fond jusqu'à leurs composés incolores ou faiblement colorés ; les minéraux moins colorants, d'une capacité isomorphe et d'une activité hydraulique plus faibles ne se forment pas.

A une température supérieure à 1200°C, on n'observe aucun nouvel accroissement de la blancheur du laitier, il fond, la consommation de chaleur augmente.

Dans les conditions isothermiques précitées, on a

- 6 -

intérêt à maintenir le laitier pendant au moins 20 minutes et au plus 60 minutes. La prolongation du maintien isothermique du laitier au-delà de 60 minutes n'entraîne qu'une augmentation de la consommation de chaleur, sans se répercuter sur la blancheur du laitier.

Conformément à l'invention, le traitement thermique est effectué dans un milieu oxydant dont la teneur optimale en oxygène est de 5 à 61 % en masse. Si la teneur en oxygène est inférieure à 5 % en masse, la durée du traitement thermique augmente, ce qui entraîne un accroissement de la consommation de combustibles et une réduction du rendement en produits finis. Si la teneur en oxygène est supérieure à 61 % en masse, la formation des phosphates de fer trivalent est favorisée, ce qui compromet la blancheur du clinker de ciment portland qu'on fabrique ultérieurement.

Conformément à l'invention, on a intérêt à effectuer le traitement thermique du laitier dans un milieu vapeur-gaz oxydant où le rapport massique entre l'oxygène et la vapeur d'eau est compris entre 10:1 et 1:10. Cette condition remplie, on peut obtenir l'additif minéral actif d'une grande blancheur sans pour cela élever la température du traitement thermique au-delà de la valeur indiquée ni accroître la durée du traitement thermique.

On a établi que si le maintien isothermique du laitier dans le milieu vapeur-gaz dure moins de 10 minutes, la blancheur du laitier diminue sensiblement, et si ce maintien dure plus de 30 minutes, il n'y a plus d'accroissement de la blancheur.

Le traitement thermique du laitier de haut fourneau ou phosphoré en vue de l'obtention de l'additif minéral

EP 0 390 923 A1

- 7 -

actif peut être effectué en l'introduisant dans une zone où se produit un réchauffement progressif du laitier jusqu'à la température prescrite. Toutefois, il paraît plus efficace d'effectuer le traitement thermique du laitier dans les conditions d'un choc thermique, par exemple en l'amenant dans la zone de refroidissement du dispositif utilisé pour la préparation du clinker de ciment portland, directement sur le mélange brut utilisé pour la préparation du clinker et ayant subi un recuit à une température de 1000 à 1450°C.

Le refroidissement du laitier de haut fourneau ou phosphoré, soumis au chauffage, peut être effectué soit en faisant circuler un courant d'air froid, soit dans de l'eau.

Le choc thermique opéré dans un milieu vapeur-gaz provoque la formation d'une défectuosité importante de la structure du laitier, d'où l'apparition de phases rappelant la bélite, d'une activité hydraulique plus forte.

Pour mieux faire comprendre l'invention, on donne ci-après les exemples non limitatifs suivants de sa réalisation.

Exemple 1.

Un laitier phosphoré granulé d'une blancheur initiale de 69 %, présentant l'aspect de grains d'une taille non supérieure à 15 mm, subit un traitement thermique dans un milieu oxydant contenant 10 % en masse d'oxygène, le traitement étant effectué pendant 20 minutes à une température de 1100°C. A l'issue du traitement thermique, on refroidit brutalement le laitier dans de l'eau.

- 8 -

La blancheur du laitier phosphoré sorti du traitement thermique est de 80 %.

Les laitiers phosphorés ayant subit ledit traitement thermique sont utilisés, en tant qu'additif minéral actif engagé dans une proportion de 5 à 60 % en masse, pour la fabrication du ciment portland.

A partir du ciment portland ainsi obtenu, mis sous forme d'un mortier d'une consistance plastique, où le rapport massique entre le ciment et le sable est de 1:3, celui entre l'eau et le ciment est égal à 0,4, on prépare des échantillons mesurant 4 x 4 x 16 cm. La solidité du ciment après 28 jours de durcissement (la teneur en laitier ayant subi le traitement thermique y étant de 10 à 20 % en masse) est supérieure de 10 à 30 MPa à celle du ciment préparé sans l'additif minéral actif. Avec l'augmentation de la teneur en additif minéral actif du ciment jusqu'à 60 % en masse, la solidité baisse de 10 à 15 MPa et se chiffre de 30 à 50 MPa.

Exemple 2.

On obtient l'additif minéral actif comme dans l'exemple 1, mais le refroidissement brutal est effectué par un courant d'air. La blancheur du laitier phosphoré ayant subi le traitement thermique équivaut, après refroidissement, à 78 %.

La solidité du ciment obtenu en présence d'un tel additif minéral actif correspond aux valeurs indiquées dans l'exemple 1.

- 9 -

Exemple 3

On obtient l'additif minéral actif à partir d'un laitier de haut fourneau ayant une blancheur de 60 %, en opérant comme dans l'exemple 1.

La blancheur du laitier de haut fourneau ayant subi le traitement thermique est, après le refroidissement dans de l'eau, de 70 %.

La solidité du ciment obtenu en présence d'un tel additif minéral actif correspond aux valeurs indiquées dans l'exemple 1.

Exemple 4.

On obtient l'additif minéral actif à partir d'un laitier de haut fourneau ayant une blancheur de 60 %, en opérant comme dans l'exemple 1, à cette exception près que le refroidissement brutal est effectué par un courant d'air. La blancheur du laitier de haut fourneau ayant subi le traitement thermique constitue, après refroidissement, 68 %.

La solidité du ciment obtenu en présence d'un tel additif minéral actif correspond aux valeurs indiquées dans l'exemple 1.

Exemple 5.

Un laitier phosphoré granulé d'une blancheur initiale de 69 %, présentant l'aspect de grains d'une taille non supérieure à 15 mm, subit un traitement thermique dans un milieu oxydant contenant 21 % en masse d'oxygène, le traitement étant effectué pendant 20 minutes à une température de 1150°C. Ceci fait, on refroidit

- 10 -

brutalement dans de l'eau le laitier ayant subi le traitement thermique.

La blancheur du laitier phosphoré ayant subi le traitement thermique est de 84 %.

La solidité du ciment obtenu en présence de l'additif minéral actif ainsi obtenu correspond aux valeurs indiquées dans l'exemple 1.

Exemple 6.

On obtient l'additif minéral actif à partir d'un laitier de haut fourneau d'une blancheur de 60 %, en opérant comme dans l'exemple 5.

La blancheur du laitier de haut fourneau ayant subi le traitement thermique est égale, après le refroidissement dans de l'eau, à 72 %.

La solidité du ciment obtenu en présence de l'additif minéral actif ainsi obtenu correspond aux valeurs indiquées dans l'exemple 1.

Exemple 7.

On obtient l'additif minéral actif comme dans l'exemple 5, à cette exception près que le refroidissement brutal est effectué par un courant d'air. La blancheur du laitier phosphoré ayant subi le traitement thermique est égale, après refroidissement, à 82 %.

La solidité du ciment obtenu en présence d'un tel additif minéral correspond aux valeurs indiquées dans l'exemple 1.

- 11 -

Exemple 8.

On obtient l'additif minéral actif à partir d'un laitier de haut fourneau d'une blancheur de 60 %, en opérant comme dans l'exemple 5, à cette exception près que le refroidissement brutal est effectué par un courant d'air. La blancheur du laitier de haut fourneau est égale, après refroidissement, à 71 %.

La solidité du ciment obtenu en présence d'un tel additif minéral correspond aux valeurs indiquées dans l'exemple 1.

Exemple 9.

Un laitier phosphoré granulé d'une blancheur initiale de 69 %, présentant l'aspect de grains d'une taille non supérieure à 15 mm, subit un réchauffement instantané en l'amenant dans un milieu oxydant contenant 60 % en masse d'oxygène et porté à une température de 1200°C. Ceci fait, on refroidit brutalement le laitier ayant subi le traitement thermique, dans de l'eau.

La blancheur du laitier ayant subi le traitement thermique est égale, après refroidissement, à 97 %.

La solidité du ciment obtenu en présence d'un tel additif minéral correspond aux valeurs indiquées dans l'exemple 1.

Exemple 10.

On obtient l'additif minéral actif à partir d'un laitier de haut fourneau d'une blancheur de 60 %, en opérant comme dans l'exemple 9.

- 12 -

La blancheur du laitier ayant subi le traitement thermique, après refroidissement dans de l'eau, est égale à 80 %. La solidité du ciment obtenu en présence d'un tel additif minéral correspond aux valeurs indiquées dans l'exemple 1.

Exemple 11.

On obtient l'additif minéral actif en opérant comme dans l'exemple 9, à cette exception près que le refroidissement brutal est effectué par un courant d'air. La blancheur du laitier ayant subi le traitement thermique est égale, après refroidissement, à 95 %.

La solidité du ciment obtenu en présence d'un tel additif minéral correspond aux valeurs indiquées dans l'exemple 1.

Exemple 12.

On obtient l'additif minéral actif à partir d'un laitier de haut fourneau d'une blancheur de 60 %, en opérant comme dans l'exemple 9, à cette exception près que le refroidissement brutal est effectué par un courant d'air. La blancheur du laitier de haut fourneau ayant subi le traitement thermique est égale, après refroidissement, à 78 %.

La solidité du ciment obtenu en présence d'un tel additif minéral correspond aux valeurs indiquées dans l'exemple 1.

Exemple 13.

Un laitier phosphoré granulé d'une blancheur initiale de 69 %, présentant l'aspect de grains d'une taille non

- 13 -

supérieure à 15 minutes, subit un traitement thermique dans un milieu vapeur-gaz où le rapport massique entre l'oxygène et la vapeur d'eau est de 1:10, en opérant pendant 10 minutes à une température de 1000°C. Ceci fait, on refroidit brutalement dans de l'eau le laitier ayant subi le traitement thermique.

La blancheur du laitier phosphoré ayant subi le traitement thermique est égale, après refroidissement, à 80 %.

La solidité du ciment obtenu en présence d'un tel additif minéral actif correspond aux valeurs indiquées dans l'exemple 1.

Exemple 14.

On obtient l'additif minéral actif en opérant comme dans l'exemple 13, à cette exception près que le traitement thermique est effectué pendant 30 minutes dans un milieu vapeur-gaz où le rapport massique entre l'oxygène et la vapeur d'eau est de 1:1, alors que le refroidissement brutal est effectué par un courant d'air.

La blancheur du laitier phosphoré ayant subi le traitement thermique est égale, après refroidissement, à 82 %.

La solidité du ciment obtenu en présence d'un tel additif minéral actif correspond aux valeurs indiquées dans l'exemple 1.

Exemple 15.

On obtient l'additif minéral à partir d'un laitier de haut fourneau d'une blancheur de 60 %, en opérant comme

- 14 -

dans l'exemple 13, à cette exception près que le traitement thermique est effectué pendant 30 minutes dans un milieu vapeur-gaz où le rapport massique entre l'oxygène et la vapeur d'eau est de 10:1.

La blancheur du laitier de haut fourneau ayant subi le traitement thermique est égale, après le refroidissement dans de l'eau, à 78 %.

La solidité du ciment obtenu en présence d'un tel additif minéral correspond aux valeurs indiquées dans l'exemple 1.

Exemple 16.

On obtient l'additif minéral actif à partir d'un laitier de haut fourneau d'une blancheur de 60 %, en opérant comme dans l'exemple 13, à cette exception près que le traitement thermique est effectué pendant 10 minutes dans un milieu vapeur-gaz où le rapport massique entre l'oxygène et la vapeur d'eau est de 1:5, alors que le refroidissement brutal est effectué par un courant d'air.

La blancheur du laitier de haut fourneau ayant subi le traitement thermique est égale, après refroidissement, à 71 %.

La solidité du ciment obtenu en présence d'un tel additif minéral actif correspond aux valeurs indiquées dans l'exemple 1.

Application industrielle

L'invention trouvera des applications dans la fabrication des ciments, à savoir le ciment portland

- 15 -

blanc et coloré, utilisé pour le finissage d'édifices et d'ouvrages, le ciment portland contenant des additifs minéraux, le ciment portland de laitier, ainsi que des liants à base de laitiers, présentant des qualités améliorées.

En outre, l'invention trouvera des applications dans la fabrication de produits céramiques et de matériaux en verre cristallin, présentant des qualités spéciales.

Bien entendu, diverses modifications peuvent être apportées par l'homme de l'art au procédé qui vient d'être décrit uniquement à titre d'exemples non limitatifs sans sortir du cadre de l'invention.

- 16 -

Revendications

1. Procédé d'obtention d'un additif minéral actif pour des matériaux de liaison par traitement thermique d'un laitier de haut fourneau granulé ou d'un laitier phosphoré granulé, caractérisé en ce que le traitement thermique est effectué dans un milieu gazeux oxydant à une température de 1000 à 1200°C.

2. Procédé suivant la revendication 1, caractérisé en ce que le traitement thermique est effectué dans un milieu vapeur-gaz oxydant où le rapport massique entre l'oxygène et la vapeur d'eau est compris entre 10:1 et 1:10.

3. Procédé suivant les revendications 1 et 2, caractérisé en ce que le traitement thermique du laitier est effectué par un réchauffement instantané de ce dernier, suivi de son refroidissement brutal.

# INTERNATIONAL SEARCH REPORT

International Application No PCT/SU 88/00183

## I. CLASSIFICATION OF SUBJECT MATTER (if several classification symbols apply, indicate all)

According to International Patent Classification (IPC) or to both National Classification and IPC

Int.Cl.⁴ — $C04B\ 22/16$

## II. FIELDS SEARCHED

### Minimum Documentation Searched

| Classification System | Classification Symbols |
|---|---|
| Int.Cl.⁴ | C04B 7/02, 7/36, 22/06, 22/08, 22/14, 22/16 |

Documentation Searched other than Minimum Documentation
to the Extent that such Documents are Included in the Fields Searched

## III. DOCUMENTS CONSIDERED TO BE RELEVANT

| Category | Citation of Document, with indication, where appropriate, of the relevant passages | Relevant to Claim No. |
|---|---|---|
| A | A.G ROMANENKO "Metallurgicheskie shlaki", 1977, Metallurgia, (Moscow), see page 37 | 1 |
| A | SU, AI, 567697 (VSESOJUZNY GOSUDARSTVENNY NAUCHNO-ISSLEDOVATELSKY INSTITUT TSEMENTNOI PROMYSKLENNOSTI), 24 August 1977 (24.08.77) | 1 |
| A | SU, AI, 893925 (KAZAKHSKY KHIMIKO-TEKHNOLOGICHESKY INSTITUT) 2 January 1982 (02.01.82) see the claims | 1 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| 12 May 1989 (12.05.89) | 12 June 1989 (12.06.89) |
| International Searching Authority<br><br>ISA/SU | Signature of Authorized Officer |

Form PCT/ISA/210 (second sheet) (January 1985)